# EUROPEAN PATENT APPLICATION

(11) **EP 2 369 272 A2**
(43) Date of publication of application: **28.09.2011**
(21) Application number: 11158543.6
(22) Date of filing: 16.03.2011
(51) Int. Cl.: F25D 17/04

(54) **Atomization of food preservation solution**

(30) Priority: 24.03.2010 US 316947 P; 08.12.2010 US 962739
(71) Applicant: WHIRLPOOL CORPORATION, Benton Harbor Michigan 49022 (US)
(72) Inventor: Bortoletto, Anderson, Waunakee, WI 53597 (US); Grewal, Rameet Singh, Benton Harbor, MI 49022 (US); Knight, John M, Benton Harbor, MI 49022 (US)
(74) Representative: Nicholls, Michael John

(57) **Abstract**

Certain embodiments of the presently described technology provide methods and systems for providing an atomized food preservation solution to food stored in a refrigerator. Certain embodiments provide an atomization unit for a refrigerator for humidifying at least a portion of the refrigerator. The atomization unit comprises an atomizer for atomizing and dispensing fluid to at least a portion of the refrigerator, a water supply for providing water to the atomizer, the water supply providing water along a fluid supply path to the atomizer, a food preservation solute dispenser located along the fluid supply path at a location where fluid will flow over the food preservation solute dispenser. The food preservation solute dispenser provides a food preservative to be dissolved in water along the fluid supply path as fluid flows over the food preservation solute dispenser. The atomizer is provided with a solution including the food preservative and dispenses the solution to the at least a portion of the refrigerator.

## Description

The presently described technology relates generally to the provision of water to the interior of a refrigerator. Further, aspects of the presently described technology relate generally to providing an atomized solution including a food preservative to food within an refrigerator.

Certain embodiments of the presently described technology provide methods and systems for providing an atomized food preservation solution to food stored in a refrigerator.

Certain embodiments provide an atomization unit for a refrigerator for humidifying at least a portion of the refrigerator. The atomization unit comprises an atomizer for atomizing and dispensing fluid to at least a portion of the refrigerator, a water supply for providing water to the atomizer, the water supply providing water along a fluid supply path to the atomizer, a food preservation solute dispenser located along the fluid supply path at a location where fluid will flow over the food preservation solute dispenser. The food preservation solute dispenser provides a food preservative to be dissolved in water along the fluid supply path as fluid flows over the food preservation solute dispenser. The atomizer is provided with a solution including the food preservative and dispenses the solution to the at least a portion of the refrigerator.

In certain embodiments, the atomizer comprises a piezo element comprising openings sized to allow controlled passage of the solution. Further, the food preservation solute dispenser may comprise a removable cartridge. In certain embodiments, the atomization unit further comprises a primary tank and a secondary reservoir located along the fluid path. The primary tank provides fluid to the secondary reservoir, and the secondary reservoir provides fluid to the atomizer. The food preservation solute dispenser is located along the fluid path interposed between the primary tank and the secondary reservoir. Optionally, the atomization unit may comprise a tank cap assembly interposed between the primary tank and the secondary reservoir, and the tank cap assembly may receive the food preservation solute dispenser. Further, the food preservation solute dispenser may comprise a substantially ring-shaped, water permeable consumable cartridge accepted by the tank cap. Also, the tank cap assembly may comprise a sealing mechanism that can prevent the flow of fluid from the primary tank to the secondary reservoir.

Certain embodiments of the presently described technology provide an atomization unit for a refrigerator for humidifying at least a portion of the refrigerator. The atomization unit comprises an atomizer for atomizing and dispensing fluid to at least a portion of the refrigerator, at least one fluid container operably connected to the atomizer for providing fluid thereto, and a food preservation solute dispenser located proximate to at least a portion of the at least one fluid container. The food preservation solute dispenser provides a food preservative to be dissolved in water inside the at least one fluid container. The atomizer is provided with a solution including the food preservative and dispenses the solution to the at least a portion of the refrigerator.

In certain embodiments, the atomizer comprises a piezo element comprising openings sized to allow controlled passage of the solution. Optionally, the food preservation solute dispenser comprises a removable cartridge adapted for removable placement in the at least one fluid container.

In certain embodiments, the food preservation solute dispenser comprises a pouch adapted for removable placement in the at least one fluid container. Optionally, the at least one fluid container comprises a piercing element for piercing the pouch. In certain embodiments, the food preservation solute dispenser comprises a soluble tablet that can be placed in the at least one fluid container. The refrigerator may be a food refrigerator, e.g. a domestic refrigerator.
The invention will be further described by way of example with reference to the accompanying drawings, in which:

Figure 1 illustrates an atomization unit formed in accordance with an embodiment of the presently described technology.

Figure 2 illustrates a refrigerator to which the atomization unit of Figure 1 may be added to or removed from, with the atomization unit in place in the refrigerator.

Figure 3 illustrates a refrigerator to which the atomization unit of Figure 1 may be added to or removed from, with the atomization unit being removed from the refrigerator.

Figure 4 illustrates an exploded perspective view of a water tank assembly formed in accordance with an embodiment of the presently described technology.

Figure 5 illustrates an exploded perspective view of a water delivery assembly formed in accordance with an embodiment of the presently described technology.

Figure 6 illustrates a perspective view of a docking station formed in accordance with an embodiment of the presently described technology.

Figure 7 illustrates a sectional view of the atomization unit of Figure 1 as the water tank assembly is being inserted into the docking station.

Figure 8 illustrates a sectional view of the atomization unit of Figure 1 with the water tank assembly securely positioned in the docking station.

Figure 9 illustrates an exploded perspective view of a water tank assembly formed in accordance with an embodiment of the presently described technology.

Figure 10 illustrates a perspective view of a food preservative cartridge formed in accordance with an embodiment of the presently described technology.

Figure 11 illustrates a sectional view of the water tank assembly of Figure 9 assembled with the poppet valve in an open position.

Figure 12 illustrates a perspective view of a reservoir and a food preservative pouch formed in accordance with an embodiment of the presently described technology.

Figure 13 illustrates a perspective view of a reservoir and food preservative tablet formed in accordance with an embodiment of the presently described technology.

Figure 14 illustrates a side view of a bottle of food preservative solution formed in accordance with an embodiment of the presently described technology

The foregoing summary, as well as the following detailed description of certain embodiments of the presently described technology, will be better understood when read in conjunction with the appended drawings. For the purpose of illustrating the invention, certain embodiments are shown in the drawings. It should be understood, however, that the present invention is not limited to the arrangements and instrumentality shown in the attached drawings.

Refrigerators are used to preserve food, maintain freshness, and prolong the shelf life of food. Certain foods benefit from the provision of water (high relative humidity) to help prolong their shelf life in a refrigerator. Certain conventional refrigerator designs do not provide for the addition of a fluid to help preserve freshness, or may provide such addition of fluid in inefficient, inflexible, and/or ineffective ways. The design, construction, and arrangement of many refrigerators places limitations on the placement and effective use of water delivery systems.

Further, food preservatives may be added to food to prolong freshness and taste. Many conventional food preservatives, however, are not conveniently or efficiently added to foodstuffs after their sale to a consumer.

It has been identified or appreciated by applicants that the challenge remains of providing improved refrigerators and/or improved delivery of a food preservative in connection with refrigerators. Applicants now address those challenges with the presently described technology.

Certain aspects of the presently described and claimed technology provide one or more systems and methods for delivering a food preservation solution to an atomizer for delivery to at least a portion of a refrigerator.

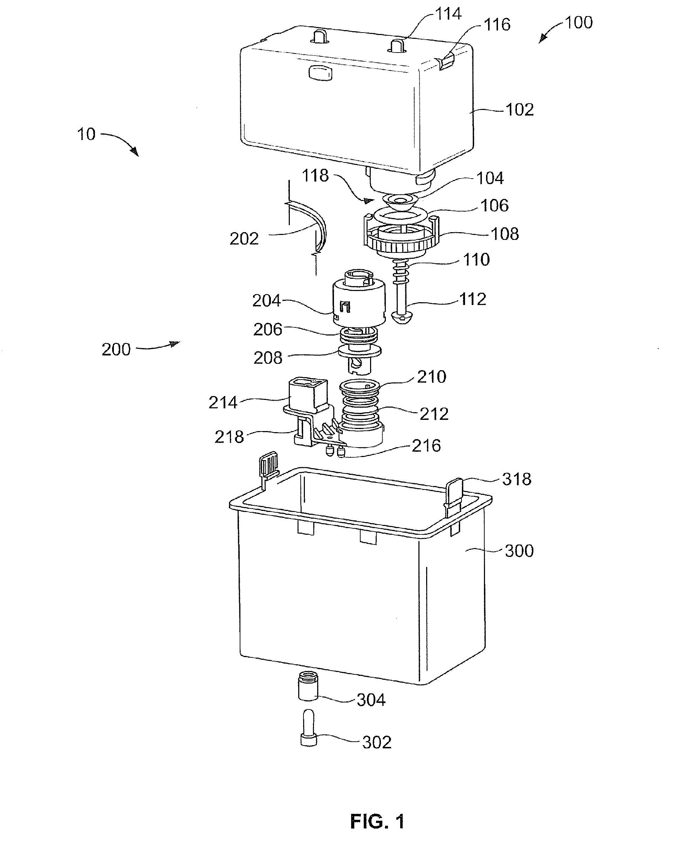

Figure 1 illustrates an atomization unit 10 formed in accordance with an embodiment of the presently described technology. The illustrated atomization unit 10 is a modular design that is configured and adapted to be added to or removed from a refrigerator as a unit. The illustrated atomization unit 10 comprises a water tank assembly 100, a water delivery assembly 200, and a docking station 300. In the illustrated embodiment, the docking station 300 is adapted to securely receive the water tank assembly 100 and the water delivery assembly 200. In turn, the docking station 300 may be securely mounted in a refrigerator.

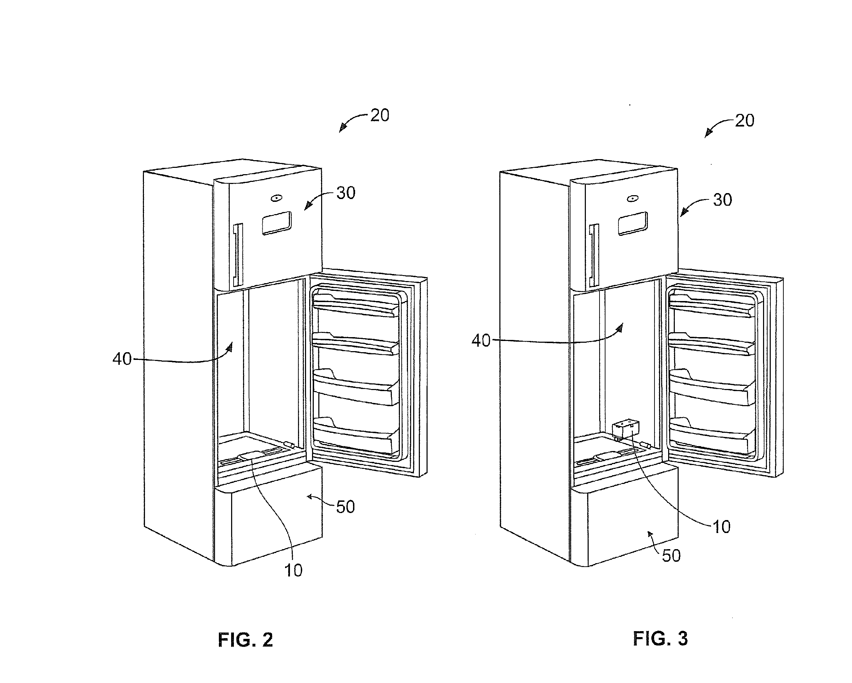

Figures 2 and 3 illustrate a refrigerator 20 to which the atomization unit 10 may be added to or removed from. In Figure 2, the atomization unit 10 is shown in place, in an assembled condition, in the refrigerator 20. In Figure 3, the atomization unit 10 is illustrated as being removed from the refrigerator 20. The atomization unit 10 may be removed from the refrigerator 20 for service, maintenance, or replacement. In certain embodiments, the atomization unit 10 may be removed from the refrigerator 20 to be refilled with a fluid, such as water. In other embodiments, the atomization unit 10 may be re-fillable without removal from the refrigerator, such as by plumbing provided within the refrigerator 20, or by a user pouring water into the atomization unit 10, or by the attachment of a replaceable bottle or other filling device to the atomization unit 10. The atomizer unit 10 may have a footprint of, for example, about 75 millimeters by about 120 millimeters. The relatively small footprint of the atomizer unit 10 and/or the modularity of the atomizer unit 10 also allow for easier retrofitting to a refrigerator not previously designed for use with an atomizer unit to accept and use the atomizer unit 10.

For the illustrated embodiment, the refrigerator 20 includes a freezer compartment 30 located at a generally higher elevation, a refrigeration compartment 40 located at a generally intermediate level, and a refrigeration/humidification compartment 50 located at a generally lower level. The atomization unit 10 is securable at an intermediate position between the refrigeration compartment 40 and the refrigeration/humidification compartment 50, and disperses a spray of fluid generally downwardly into the refrigeration/humidification compartment 50. In such an arrangement, the atomization unit may be supplied with water from a defrosting process in a compartment located at a higher level, the water being gravity fed to the atomization unit 10. Other refrigeration arrangements may be employed in other embodiments. As an example, an atomization unit may be located proximate a side wall of a refrigeration compartment. Additionally or alternatively, the refrigerator compartment and atomization unit may be configured and adapted so that some subcompartments of a larger compartment are supplied with atomized fluid and some are not, or further that subcompartments may be supplied with atomized fluid at different rates or amounts. Such subcompartments may be defined by bins, trays, and/or shelves dispersed throughout a compartment. The various compartments may be differently sized and/or arranged in other embodiments. As an example, a refrigerator may not comprise a separate refrigerator/humidification compartment, but may instead comprise a freezer unit and a refrigerator unit arranged in a side-by-side fashion, with an atomization unit providing humidification to all or part of the refrigeration unit.

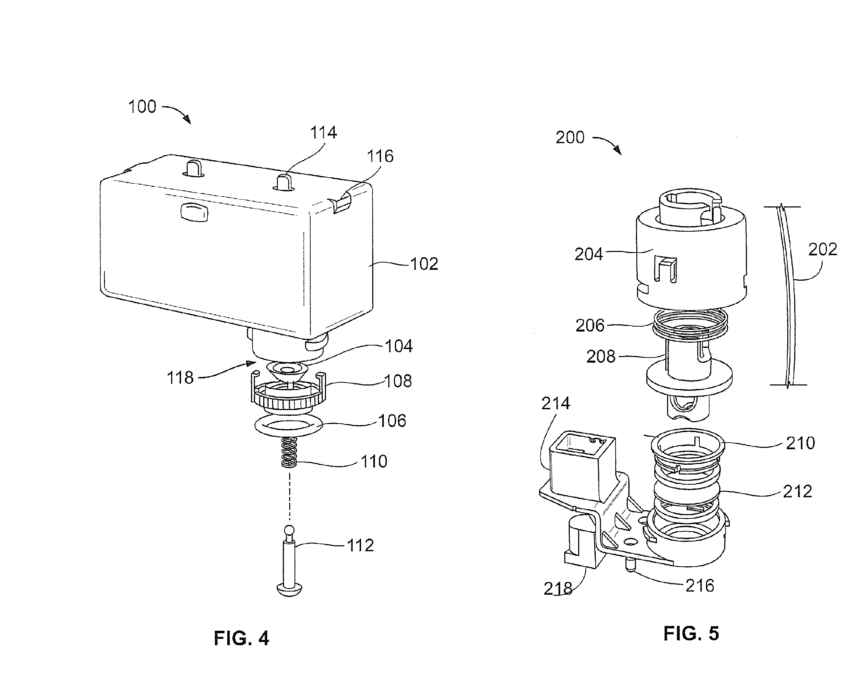

Returning to Figure 1, as also indicated above, the atomization unit 10 comprises a water tank assembly 100, a water delivery assembly 200, and a docking station 300. Figure 4 illustrates an exploded perspective view of the water tank assembly 100. The water tank assembly 100 includes a water tank 102, a poppet valve seal 104, an o-ring 106, a water tank cap 108, a poppet valve spring 110, a poppet valve 112, ears 114, and tabs 116.

The water tank 102 is configured and adapted to hold a volume of fluid. The water tank 102 is an example of a primary fluid reservoir or main supply fluid tank. As such, the water tank 102 should be constructed to be water tight, especially around its sides and bottom, to prevent leakage. The water tank 102 comprises one or more locations for the controlled entry and/or exit of fluid. Further, in the illustrated embodiment, the water tank 102 is configured to be airtight when the opening 118 is closed to the entry of air by being shut by a valve or submersed below a liquid level. The illustrated water tank 102 comprises an opening 118 located proximate the bottom of the water tank 102, which is sized and adapted to accept the water tank cap 108 and related components to allow for the controlled dispensing of water from the water tank 102. The water tank 102 may be inverted, with the water tank cap 108 removed, to be manually filled with water. In other embodiments, the water tank 102, may be re-filled manually through a separate or additional cap accessible when the atomizer unit 10 is in place in the refrigerator, by a plumbing feed from water from another portion of the refrigerator or an external supply, and/or by a replaceably attachable supply such as a bottle. In other embodiments, a replaceable supply such as a bottle may act as a supply of water without the use of a separate primary water tank.

In the illustrated embodiment, the ears 114 are located proximate to an external top surface of the water tank 102, and provide a convenient access point for handling the atomizer unit 10 during installation to and removal from the refrigerator 20. The ears 114 also provide a convenient access point for removing and/or installing the water tank 102 to the docking assembly 300. The tabs 116 are configured to help guide the water tank 102 into place into the docking station 300, and are configured to help secure the water tank 102 in place in the docking station 300.

As also previously mentioned, the water tank assembly 100 includes a poppet valve seal 104, an o-ring 106, a water tank cap 108, a poppet valve spring 110, and a poppet valve 112. The water tank cap 108 is sized and configured to cooperate with the opening 118 of the water tank 102 to allow fluid flow when the poppet valve 112 is open, and to prevent fluid flow when the poppet valve 112 is closed. The poppet valve seal 104, o-ring 106, water tank cap 108, and poppet valve spring 110 cooperate to prevent fluid flow when the poppet valve 112 is in a closed position. For example, the seals and o-ring are configured to help provide a waterproof barrier. The poppet valve spring 110 is configured to urge the poppet valve 112 in a closed position, and the poppet valve seal 104 is mounted to the poppet valve 112 so that the poppet valve seal 104 moves with the poppet valve 112. In the illustrated embodiment, the poppet valve seal 104 is generally funnel shaped and configured to prevent flow through the water tank cap 108 when the poppet valve 112 is in a closed position. The funnel shape helps properly seat the poppet valve seal 104 with the assistance of downward pressure provided by a water column above it, when the poppet valve 112 is in a closed position. As shown in Figs. 1 and 4, the poppet valve spring 110 is configured to bias the poppet valve 112 downward, thus drawing the poppet valve seal 104 down over an opening in the water tank cap 108. The poppet valve 112 is opened by pressing upward on the poppet valve 112 against the urging of the poppet valve spring 110, thereby moving the poppet valve seal 104 (which is mounted to the poppet valve 112) upward and away from the opening in the water tank cap 108, thereby allowing fluid flow. Thus, when fluid flow is desired, the poppet valve 112 may be urged against the poppet valve spring 110 to an open position to allow fluid flow through the water tank cap 108. Once fluid flow is desired to be stopped, the poppet valve 112 may be returned to a closed position, where the poppet valve spring 110 will help close it and maintain it in place. In other embodiments, different valve arrangements and/or cap opening/closing arrangements and/or fluid flow mechanisms may be employed.

Figure 5 illustrates an exploded perspective view of the water delivery assembly 200. In the illustrated embodiment, the water delivery assembly includes a wick 202, a wick holder 204, a wick spring 206, a wick plunger 208, a piezo compression ring 210, a piezo cell 212, a piezo casing 214, and light emitting diodes (LEDs) 216. The water delivery assembly 200 in the illustrated embodiment is modular, and may be assembled and removed from and/or installed into the docking station 300 as a unit.

The wick 202 is configured to be a flexible member with sufficient absorbency to be able to deliver fluid from a reservoir to the piezo cell 212. The wick 202 may be constructed of a cotton material, such as material from Pepperell Braiding Co., which can range in size, for example, from about 1/16 inch to about ½ inch and may be capable of drawing water up to about 8 inches. The wick holder 204, wick spring 206, and wick plunger 208 are configured and adapted to maintain one end of the wick 202 in proximity to the piezo cell 212, so that the wick 202 may act as a fluid conduit to the piezo cell 212. The wick holder 204 and/or other components provide an example of a wick guide. The wick 202 is positioned such that one end of the wick 202 is in fluid communication with a source of fluid, and the other end is proximate to the piezo cell 212, so that the fluid is provided from a source of fluid to the piezo cell 212 via the wick 202. In certain embodiments, the wick is securely attached to the piezo cell, or element. In other embodiments, the wick is not securely attached to the piezo cell, but is positioned close enough to the piezo cell to provide water or other fluid. The piezo casing may define a piezo reservoir that is supplied by the wick and maintains a volume of water proximate to the piezo cell.

The piezo casing 214 and piezo compression ring 210 cooperate to help maintain the piezo cell 212 in a desired position. The piezo casing 214 also includes a female docking pin 218 adapted to help secure the water delivery assembly 200 in place in the docking assembly 300. The piezo cell 212 is a relatively thin, perforated disk that, when stimulated vibrates, whereby fluid from a top surface of the piezo cell 212 is drawn through the perforations and distributed in an atomized spray from a bottom surface of the piezo cell 212. For example, the piezo cell 212 may be about 20 millimeters in diameter and between about 0.65 and about 0.83 millimeters thick. The perforations may be sized, for example, from about 8 to about 12 microns. The piezo cell 212 may have an activating frequency of about 110 Kilohertz, and may provide a misting rate of greater than about 10 cubic centimeters per hour. Perforations above about 12 microns may increase the possibility of leakage, while perforations under about 6 microns may contribute to clogging, thereby shortening the effective life. This atomized fluid may then be used to provide moisture in an easily accepted form to foodstuffs in an appropriate compartment that is supplied with an atomizer. The wick holder 204 and related components cooperate with the piezo casing 214 and related components to form a modular unit that may be handled as a unit, and helps maintain the piezo cell 212 in proper position. The wick plunger 208 may urge against the piezo compression ring 210 to help maintain the piezo cell 212 in place as well as to help prevent any leakage from the water delivery assembly 200. The wick holder 204 may be snappably and removably received by the piezo casing 214. The LEDs 216 light to provide information regarding the status and/or function of the piezo cell 212.

The piezo cell 212 is an example of an atomizer that may be used to provide a fine spray of fluid. Such a fine spray of fluid, for example water, can be beneficial in a refrigerator application, as certain foodstuffs advantageously absorb the water provided in such a fine spray in a more effective manner compared to certain other methods of providing water to foodstuffs. The humidity provided by the atomizer improves preservation of vegetables and other fresh foods, prevents food odor transfer to other food in the refrigerator, helps maintain the color of green vegetables longer and aid nutrition retention, and improves savings due to avoiding waste of vegetables.

As shown in Figure 1, the docking station 300 includes a male docking pin 302 and grommet 304 configured to cooperate with the female docking pin 218 to secure the water delivery unit 200 in place. The grommet 304 helps maintain water-tightness through the opening of the docking station 300 that accepts the male docking pin 302 and grommet 304. Docking station 300 also includes snaps 318 that cooperate with the tabs 116 of the water tank 102 to help guide, place, and secure the water tank 102 to the docking station 300. With the water tank assembly 100 and water delivery assembly 200 in place in the docking station 300, the assembled components form a modular assembly that can be conveniently attached to and removed from the refrigerator 20. The modular design of the entire unit as well as various modular sub-assemblies also simplifies repairs and maintenance, as well as easing the process of retrofitting the unit to a refrigerator not originally designed to accommodate such a unit.

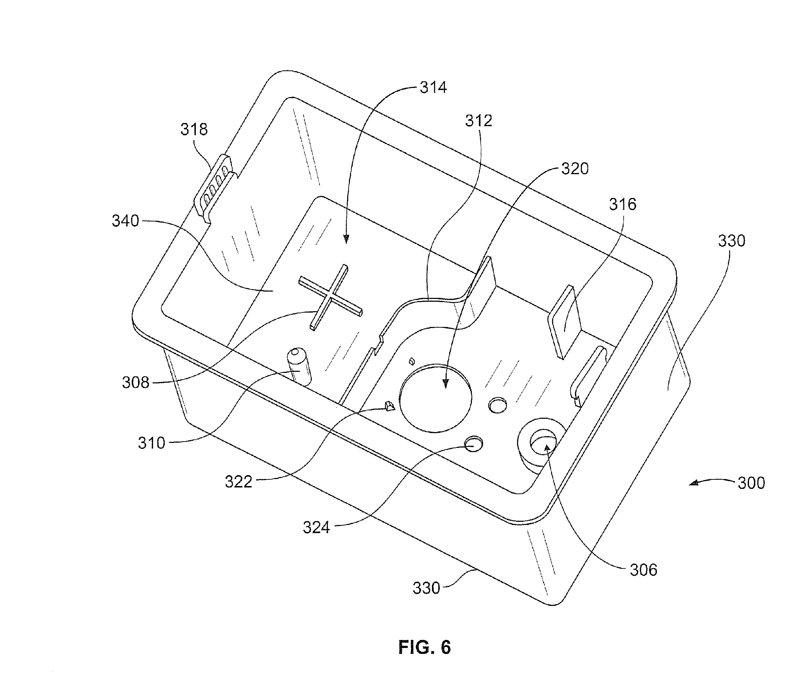

Figure 6 illustrates a perspective view of a docking station 300. The docking station 300 of the illustrated embodiment includes side walls 330 that extend from a base 340 to define an open volume. The docking station 300 is configured to accept the water delivery assembly 200 and the water tank assembly 100. In the illustrated embodiment, the docking station 300 is molded as a single piece. The docking station 300 comprises a water delivery assembly mounting hole 306, a valve projection 308, a switch projection 310, a reservoir wall 312, a docking station reservoir 314, ribs 316, snaps 318, a piezo opening 320, and mounting features 322, 324.

The water delivery assembly mounting hole 306 is configured to cooperate with the female docking pin 218, male docking pin 302, and grommet 304 to help secure the water delivery assembly 200 in place in the docking station 300. Additionally, the illustrated embodiment includes mounting features 322, 324 to help guide, located, and/or secure the water delivery assembly 200 in place in the docking station 300. As shown in Figure 6, mounting features 322 comprise raised surfaces and mounting features 324 comprise holes in the base 340 of the docking station 300. Further, the docking station 300 is configured to allow wiring for power supply and control to be connected to the water delivery assembly 200.

The valve projection 308 extends from the base 340 of the docking station 300, and is positioned and configured to press against the bottom of the poppet valve 112 when the water tank assembly 100 is lowered into place in the docking station 300. The atomization unit 10 is configured so that, when the water tank assembly 100 is securely positioned in place in the docking unit 300, the poppet valve 112 is urged upward by contact with the valve projection 308 into an open position thereby allowing fluid flow. In alternative arrangements, the docking station reservoir 300 (or other reservoir with which a wick is in fluid communication) may be provided with water from a source other than a water tank, such as via municipally provided water via plumbing into the refrigerator, or water obtained from a defrosting process elsewhere in the refrigerator.

The switch projection 310 extends upward from the base 340 of the docking station 300. The switch projection 310 cooperates with a reed switch (not shown) to indicate the position of the water tank 102, for example, to indicate whether or not the water tank 102 is in its secure, assembled position within the docking station 300.

The reservoir wall 312 is a generally vertical wall that extends upward from the base 340, and together with portions of the base 340 and side walls 330 defines a docking station reservoir 314. The docking station reservoir 314 is an example of a secondary reservoir that accepts fluid from a primary reservoir or main supply, such as a water tank, and from which fluid is provided to an atomizer via the wick 202. In the illustrated embodiment, the docking station reservoir 314 is integrally formed with the docking station 300. In other embodiments, a secondary reservoir that is not integrally formed with a docking station may also be employed. The reservoir wall 312 extends from the base 340 to a height that is low enough to not interfere with the placement of the water tank 102 in the docking assembly 300, but high enough to retain water in the docking station reservoir 314 without water spilling over the top of the reservoir wall 312. As will be appreciated further below, the reservoir wall 312 in the illustrated embodiment extends to a height such that its top is located at an elevation higher than the opening through the water tank cap 108 when the water tank 102 is in its secured, assembled position in the docking station 300.

The ribs 316 extend upward from the base 340 of the docking station and are configured to provide support to the water tank 102 when the water tank 102 is placed in the docking station 300. The ribs 316 also provide a positive stop to help prevent the water tank 102 from being pressed too deeply into the docking station 300 and damaging portions of the water delivery assembly 200.

The snaps 318 extend upward from the sides of the docking unit 300. The snaps are configured to be resiliently biasable, and to cooperate with the tabs 116 of the water tank 102 to secure the water tank 102 in place to the docking station 300.

The piezo opening 320 extends through the base 340 and is configured to provide an opening for the piezo cell 212, so that an atomized spray from the piezo cell 212 is delivered to a desired location in a refrigerator.

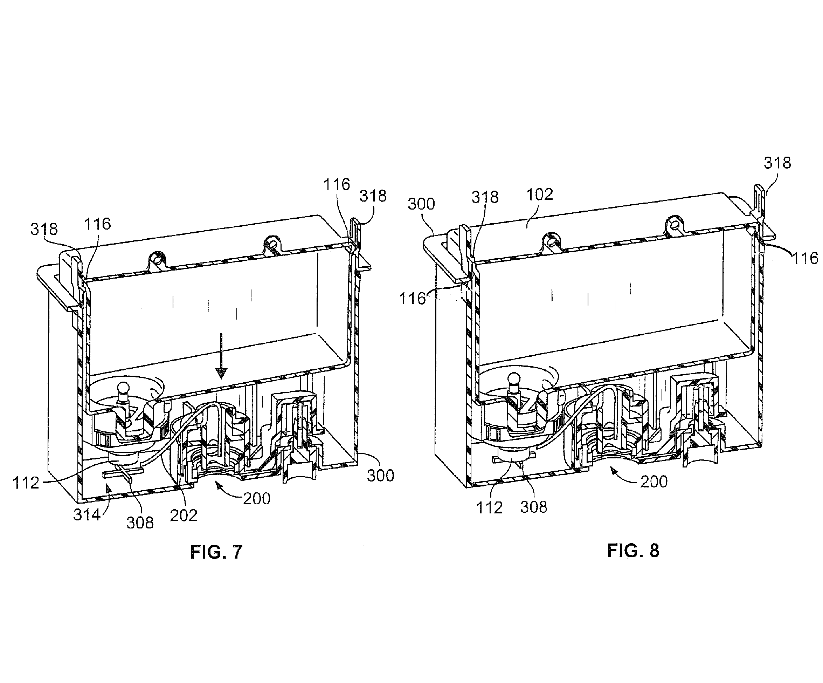

The assembly of the atomization unit 10 may be accomplished as discussed below. Figure 7 illustrates a sectional view of the atomization unit 10 as the water tank assembly 100 is being inserted into the docking station 300, and Figure 8 illustrates a sectional view of the atomization unit 10 with the water tank assembly 100 securely positioned in the docking station 300. The water delivery system 200 may be assembled, positioned, and secured in place to the docking station 300, with one end of the wick 202 proximate the piezo cell 212, and the other end of the wick 202 positioned in the docking station reservoir 314 where the wick 202 will be in fluid communication with a liquid supply to provide liquid to the piezo cell 212. The docking station 300 may then be securely positioned in the refrigerator 20, and all necessary connections made to provide power and/or control to the water delivery system 200. As an alternative, the water tank assembly 100 may be positioned in the docking station 300 before the docking station 300 is positioned in the refrigerator 20.

Before installing the water tank assembly 100, the water tank 102 may be filled with water. To fill, the water tank 102 is inverted so that the opening faces upward, and the water tank cap 108 and related components are removed from the water tank 102, providing access to the opening. A desired amount of water is then poured into the water tank 102, and the water tank cap 108 and related components are re-positioned on the water tank 102. With the water tank cap 108 securely fastened to the water tank 102 and the poppet valve spring 110 urging the poppet valve 112 into a closed position, the opening is closed and the water tank 102 is sealed, so that it may transferred without spillage.

The water tank 102 is then oriented for installation, with the water tank cap 108 oriented downward and aligned over the valve projection 308. As shown in Figure 7, the water tank assembly 100 is then lowered in place into the docking station 300. Eventually, as the water tank assembly 100 is lowered, the poppet valve 112 will come into contact with the valve projection 308 to initiate opening of the poppet valve 112. Also, during the lowering, the tabs 116 of the water tank 102 encounter the snaps 318 of the docking station 300, and as the water tank 102 is further lowered, the tabs 116 press against the snaps 318, resiliently biasing the snaps 318 outwardly. For example, the tabs 116 may comprise sloped surfaces to assist in biasing the snaps 318 outwardly. As the water tank reaches its final, secured position, the tabs 116 pass beyond the snaps 318, allowing the snaps 318 to resiliently snap back into their original position, helping secure the water tank 102 in place.

At the same time, as the water tank 102 reaches its final, secured position, the poppet valve 112 is moved into its open position by its contact with the valve projection 308. With the poppet valve 112 in its open position, liquid flows from the water tank 102 through the opening in the water tank cap 108 into the docking station reservoir 314. Thus, the poppet valve 112 is an example of a secondary reservoir supply valve. The liquid continues to flow and fill the docking station reservoir 314 until the liquid rises to a level high enough to cover the opening in the water tank cap 108, such that the opening is not exposed to atmospheric pressure but is instead surrounded by liquid. At this point, atmospheric pressure acting on the top of the liquid in the docking station reservoir 314 is sufficient to prevent any further flow into the docking station reservoir 314. Thus, the atomization unit 10 is configured to provide a maximum, controlled height of fluid in the docking station reservoir 314. As liquid is removed from the docking station reservoir via the wick 202 (which delivers liquid to the piezo cell 212 from where it is atomized into at least a portion of a refrigerator), water from the water tank 102 will replenish the docking station reservoir 314 to maintain the water level in the docking station reservoir 314 at a height sufficient to shield the opening in the water tank cap 108 from atmospheric pressure.

The atomization unit 10 may be configured to maintain the level of water in the docking station reservoir 314 below a certain height to prevent water at too high of a pressure from being delivered to the piezo cell 212. For example, certain piezo cells do not function properly when exposed to water pressure caused by a head of about 3 inches. Thus, in certain embodiments, the atomization unit 10 is configured so that the level of water in the docking station reservoir 314 is maintained at a level below about 3 inches. The opening and closing of a valve from the water tank may be controlled by sensors and switches based on the level of water in the secondary reservoir. For example, the valve may be opened when the level of water falls below a certain height, and closed when the level reaches a second height. In other embodiments, sensors may send signals to control the flow of water into the docking station reservoir 314 from an external supply via plumbing into the refrigerator.

With the atomizer unit 10 in place, an atomized spray may now be provided to a desired portion or portions of a refrigerator. The atomizer unit 10 defines a fluid flow path including the water tank 102, through the water tank cap 108 and into the docking station reservoir 314, and from the docking station reservoir 314 to the piezo cell 212 via the wick 202. The piezo cell 212 then may deliver an atomized spray.

In certain embodiments, liquid delivered to the piezo cell is a food preservative solution. Because the atomization does not involve a phase change, a food preservative solute dissolved or dispersed in liquid that is atomized will be atomized and distributed with the liquid. A food preservative solute may be added to water along the fluid flow path, or fluid supply path, before reaching the piezo cell. As examples, a food preservation solute in connection with embodiments similar to the atomizer unit 10 discussed above may be added to water before it is placed in the main water tank or fluid supply, may be provided to the water inside a reservoir such as the main water tank or the secondary reservoir, may be provided at a location interposed between the main water tank and the secondary reservoir, or may be provided at a location interposed between the secondary reservoir and the piezo cell. As will be appreciated by one of ordinary skill in the art, further alternative locations and arrangements of liquid supplies and fluid supply paths may also be employed.

Food preservatives that can be incorporated into the liquid that is atomized include a wide variety of substances that are intended to preserve and/or enhance one or more qualities of the stored food products, such as, for example, freshness, nutritional value, shelf-life, appearance, flavor and texture. Such food preservatives include, for example, vitamins, minerals, anti-oxidants, anti-fungal and anti-microbial agents, and flavor and/or scent enhancers. The food preservatives should be soluble or dispersible in water so that they can be delivered to the stored food products in the form of the atomized water. The food preservatives also must be safe for use on food products, for example those substances that have been designated as Generally Regarded as Safe (GRAS) by the U.S. Food and Drug Administration.

Suitable food preservatives that can be used to form the food preservative solution include vitamins and minerals, such as, for example, ascorbic acid, thiamine, niacin, Beta-carotene, pantothenic acid, calcium, magnesium, copper and zinc, and derivatives thereof. Alternatively, the food preservative can be an anti-microbial composition that is effective against bacteria, fungi and yeast. Such anti-microbial compositions are preferably natural or plant-based materials that can increase storage life and freshness of the stored produce without having a negative impact on the quality of such produce.

Another alternative for the food preservative is an anti-fungal agent. Particularly suitable anti-fungal agents for use herein are food safe anti-fungal agents such as citrus essential oils. Exemplary citrus essential oils include lemon, orange, mandarin and grapefruit essential oils. Mixtures of such oils are also contemplated. Because the citrus essential oils are coming from natural, plant-based materials, they are compatible with fruits and vegetables contained within the crisper compartment of the refrigerator. Suitable anti-microbial agents can also be derived from other essential oils, including clove oil, cinnamon oil, bay oil, oregano oil, thyme oil, coriander oil, paprika oil, caraway oil, dill oil and coconut oil. Additional anti-microbial agents that can be used, for example, include benzoic acid, lactic acid, methyl paraben, calcium sorbate, calcium benzoate, sodium diacetate, and calcium oxide.

It is also contemplated that, although not a food preservative in the technical sense, flavor and/or scent enhancers can be atomized like a food preservative and used alone or in conjunction with one or more of the other food preservatives to impart improved flavor or aroma to the food. For purposes of this application, such flavor and scent enhancers are encompassed by the term "food preservative." Such flavor and/or scent enhancers include, for example, extracts derived from anise, caraway, cinnamon, coriander, lavender, nutmeg, peppermint, spearmint, vanilla, clove, oregano, thyme, paprika, lemon and orange. Other flavor enhancers contemplated for use in the present technology include, but are not limited to, acetic acid, citric acid, benzoic acid, lactic acid, propionic acid, succinic acid, tartaric acid, ammonium citrate, sodium citrate, sodium carbonate, potassium carbonate, potassium lactate, potassium sulfate, potassium chloride and magnesium sulfate.

The food preservative can be provided in a variety of forms such as a liquid, solid, powder or gel that is soluble in the atomization liquid. The food preservative is present in the atomization liquid in an amount such that the atomized liquid applied to the stored produce delivers an effective amount of food preservative to preserve and/or enhance one or more qualities of the produce compared to an atomized liquid not containing the food preservative. An effective amount of food preservative will depend on the type of food preservative, the nature and type of produce stored within the refrigerator, as well as the atomization cycle times and amount of atomization liquid delivered to the produce. In general, it is contemplated that an effective amount of food preservative ranges from about .001% by weight to about 5.0% by weight of the delivered atomization fluid.

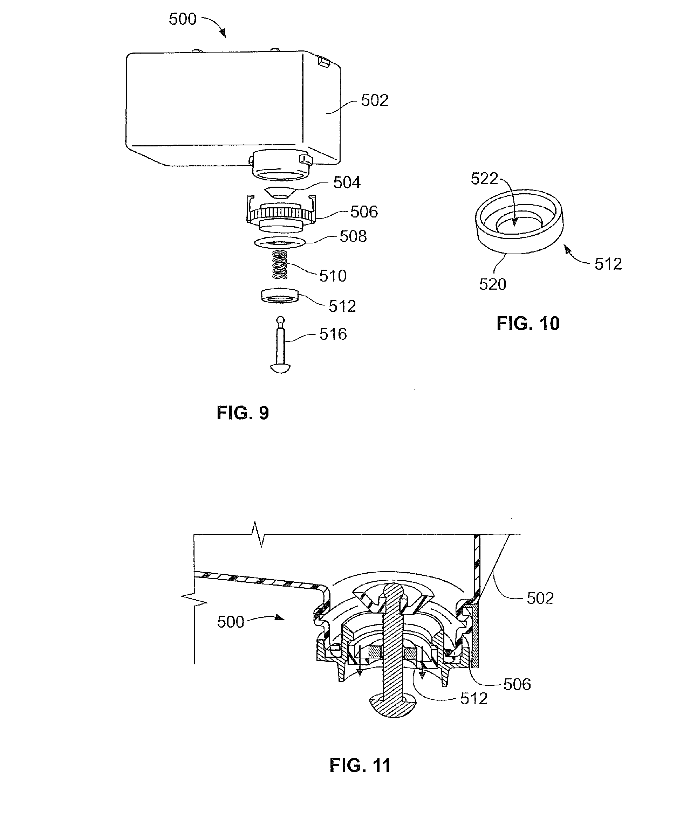

Figure 9 illustrates an exploded perspective view of a water tank assembly 500 formed in accordance with certain embodiments of the presently described technology. The water tank assembly may be compatible with the atomizer unit 10 discussed above, and generally similar in certain respects to the water tank assembly 100 discussed above.

The water tank assembly 500 includes a water tank 502, poppet valve seal 504, a water tank cap 506, an o-ring 508, a poppet valve spring 510, a food preservative cartridge 512, and a poppet valve 516. The water tank assembly 502 may be in many respects similar in structure and function to the previously described water tank assembly 102. The water tank cap 506 of the water tank assembly 500 is configured to receive and hold the food preservative cartridge 512, and the water tank assembly 500 is configured so that water flowing out of the water tank 502 passes through the food preservative cartridge 512 on its way to a secondary reservoir and/or to a piezo cell. This is one example of how a food preservative cartridge may be located along the fluid supply path.

Figure 10 illustrates a perspective view of the food preservative cartridge 512. The food preservative cartridge 512 comprises a body 520 and an opening 522. The body 520 is a generally ring-shaped structure sized and configured to be accepted and retained by cooperating features in the water tank cap 506. The opening 522 is a generally circular opening sized and configured to allow passage of portions of the poppet valve 516 and related components. The food preservative cartridge 512 is a water permeable structure that provides a food preservation solute that is dissolved in water that passes over the food preservative cartridge 512. For example, the body 522 may be constructed of a solid food preservative that allows water to permeate through and dissolve portions of it as the water passes. As another example, the body 522 may comprise a fine mesh structure that surrounds and supports a dissolvable food preservative in a powder or gel form.

Figure 11 provides a sectional view of the water tank assembly 500, with the poppet valve 516 in an open position. As shown, the food preservative cartridge 512 is positioned in the water tank cap 506 such that water leaving the water tank 502 must pass over the food preservative cartridge 512. In the illustrated embodiment, the water tank cap 506 and related components provide an annular ring-shaped passage through which liquid from the water tank 502 may flow, and the food preservative cartridge 512 is positioned to cover the annular ring-shaped passage so that liquid leaving the water tank 502 will flow through the food preservative cartridge 512.

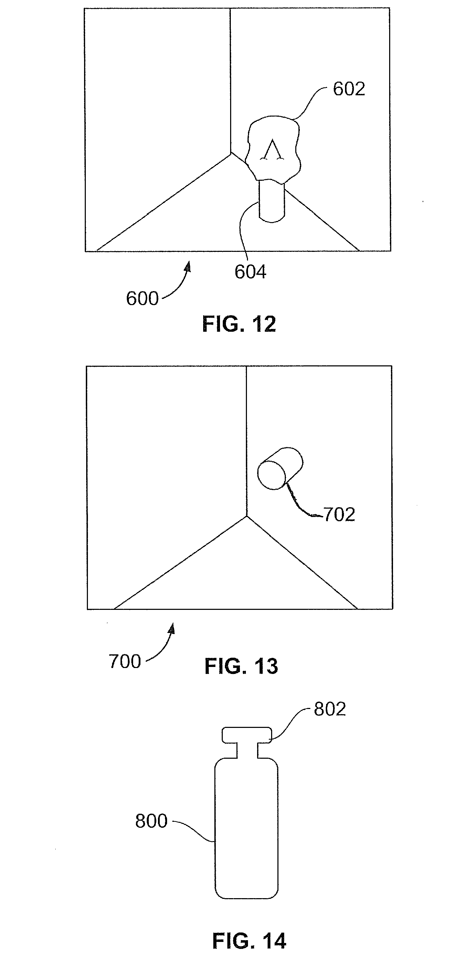

Figure 12 illustrates a perspective view of a reservoir 600 and a food preservative pouch 602 formed in accordance with an embodiment of the presently described technology. The food preservative pouch 602 comprises a food preservative solute that dissolves in water. For example, embodiments of the presently described technology utilize a food preservative pouch that comprises a fine mesh structure that surrounds and supports a dissolvable food preservative in a powder or gel form. In the illustrated embodiment, the food preservative pouch 602 comprises a generally solid exterior surrounding a food preservative solute, and the reservoir 600 comprises a piercing structure 604. The piercing structure 604 may comprise a pin protruding from an internal surface of the reservoir 600. The food preservative pouch 602 is pressed onto the piercing structure 604, thereby exposing the contents of the food preservative pouch 602 to water in which it may be dissolved, as well as securing the food preservative pouch 602 in place within the reservoir 600. A main water tank, secondary reservoir, or piezo reservoir as discussed above provide examples of reservoirs into which the food preservative pouch 602 may be placed. In other embodiments the food preservative pouch 602 may be freely disposed in the reservoir 600. Care should be exercised, however, that the food preservative pouch 602 is not free to travel directly to a piezo cell where it may act to block the perforations.

Figure 13 illustrates a perspective view of a reservoir 700 and food preservative tablet 702 formed in accordance with an embodiment of the presently described technology. The food preservative tablet 702 comprises a food preservative solute that dissolves in water. A main water tank, secondary reservoir, or piezo reservoir as discussed above provide examples of reservoirs into which the food preservative tablet 702 may be placed. In the illustrated embodiment, the food preservative tablet 702 is adapted to be securely and/or adhesively affixed to a side wall of the reservoir 700. In other embodiments the tablet 702 may be freely disposed in the reservoir 700. Care should be exercised, however, that the tablet 702 before its dissolution is not free to travel directly to a piezo cell where it may act to block the perforations.

Figure 14 illustrates a side view of a bottle 800 of food preservative solution formed in accordance with an embodiment of the presently described technology. The bottle 800 may be purchased by a consumer pre-filled with a desired food preservation solution. As an example, a consumer may purchase a food preservation solute in a powder, gel, or liquid form that is mixed with water to form a food preservation solution that is then poured into the bottle 800. The bottle 800 may be attached to a refrigerator and/or contained within the refrigerator. The bottle 800 comprises an upper portion 802 that is adapted to cooperate with a mounting feature to secure the bottle in place. As an example, the upper portion 802 may accept a cap assembly similar to that of the previously discussed water tank cap 108. Such a bottle may then be mounted to a docking station in lieu of a water tank. In other embodiments, the bottle may supply a main water tank, and in still other embodiments, the bottle may be configured to provide liquid to a piezo cell without the use of intermediate or secondary reservoirs.

In selecting and configuring a food preservative solute and/or food preservative dispenser, several factors may be considered in addition to the general effectiveness of the food preservative itself. The system should be selected and configured, for example, such that the solute is compatible with the atomizer, and the resulting solution does not clog the atomizer or impede its general performance. Other considerations include the rate which the solute and/or dispenser allow for dissolving of the solute, and its impact on the concentration of solute in the solution formed as well as the time required before the solute must be replenished.

Embodiments of the presently described technology provide a wide variety of arrangements and methods by which a food preservative solution may be atomized and distributed in a refrigerator. Delivery of a food preservative may be accomplished in fluid delivery arrangements either with or without the use of a flexible wick, and either with or without the use of a secondary reservoir. Further, multiple atomizers may be used to provide food preservative solution to multiple compartments and/or subcompartments of a refrigerator. Further still, the use of multiple liquid sources allows for the delivery of atomized food preservative solution to one or more portions of a refrigerator and delivery of an atomized spray that contains no food preservative (or a different food preservative) to other portions of a refrigerator.

Certain embodiments of the presently described technology thus can provide a modular assembly and/or sub-assemblies for the provision of atomized food preservation solutions in a refrigerator. Such an assembly improves the ease, convenience, and/or effectiveness of adding food preservative by a consumer.

While the presently described technology has been described with reference to certain embodiments, it will be understood by those skilled in the art that various changes may be made without departing from the scope of the invention as defined by the scope of the appended claims.

## Claims

1. An atomization unit for a refrigerator for humidifying at least a portion of the refrigerator, the atomization unit comprising
an atomizer for atomizing and dispensing fluid to at least a portion of the refrigerator;
a water supply for providing water to the atomizer, the water supply providing water along a fluid supply path to the atomizer;
a food preservation solute dispenser located along the fluid supply path at a location where fluid will flow over the food preservation solute dispenser, the food preservation solute dispenser providing a food preservative to be dissolved in water along the fluid supply path as fluid flows over the food preservation solute dispenser;
wherein the atomizer is provided with a solution including the food preservative and dispenses the solution to the at least a portion of the refrigerator.

2. The atomization unit of claim 1 further comprising a primary tank and a secondary reservoir located along the fluid path, the primary tank providing fluid to the secondary reservoir, the secondary reservoir providing fluid to the atomizer, and wherein the food preservation solute dispenser is located along the fluid path interposed between the primary tank and the secondary reservoir.

3. The atomization unit of claim 2 further comprising a tank cap assembly interposed between the primary tank and the secondary reservoir, and wherein the tank cap assembly receives the food preservation solute dispenser.

4. The atomization unit of claim 3 wherein the food preservation solute dispenser comprises a substantially ring-shaped, water permeable consumable cartridge accepted by the tank cap.

5. The atomization unit of claim 3 or 4 wherein the tank cap assembly comprises a sealing mechanism that can prevent the flow of fluid from the primary tank to the secondary reservoir.

6. An atomization unit for a refrigerator for humidifying at least a portion of the refrigerator, the atomization unit comprising
an atomizer for atomizing and dispensing fluid to at least a portion of the refrigerator;
at least one fluid container, the at least one fluid container operably connected to the atomizer for providing fluid thereto;
a food preservation solute dispenser located proximate to at least a portion of the at least one fluid container, the food preservation solute dispenser providing a food preservative to be dissolved in water inside the at least one fluid container; and
wherein the atomizer is provided with a solution including the food preservative and dispenses the solution to the at least a portion of the refrigerator.

7. The atomization unit of claim 6 wherein the food preservation solute dispenser comprises a pouch adapted for removable placement in the at least one fluid container.

8. The atomization unit of claim 7 wherein the at least one fluid container comprises a piercing element for piercing the pouch.

9. The atomization unit of claim 6 wherein the food preservation solute dispenser comprises a soluble tablet that can be placed in the at least one fluid container.

10. The atomization unit of claim 6, 7, 8 or 9, wherein the at least one fluid container comprises a primary tank and a secondary reservoir, the primary tank providing fluid to the secondary reservoir, the secondary reservoir providing fluid to the atomizer, and wherein the food preservation solute dispenser is located in at least one of the primary tank and the secondary reservoir.

11. The atomization unit of any one of the preceding claims wherein the atomizer comprises a piezo element comprising openings sized to allow controlled passage of the solution.

12. The atomization unit of any one of the preceding claims wherein the food preservation solute dispenser comprises a removable cartridge.

13. The atomization unit of any one of the preceding claims wherein the food preservative is selected from the group consisting of vitamins, minerals, anti-microbial agents, anti-fungal agents, anti-oxidants, flavor enhancers and scent enhancers.

14. The atomization unit of claim 13 wherein the anti-microbial agent is a citrus essential oil, for example: orange, grapefruit, mandarin, lemon or mixtures thereof.
